# EUROPEAN PATENT APPLICATION

(11) **EP 2 930 679 A1**
(43) Date of publication of application: **14.10.2015**
(21) Application number: 13824848.9
(22) Date of filing: 24.06.2013
(51) Int. Cl.: G06Q 30/02

(54) **MEMBERSHIP PROCESSING METHOD PERFORMED ACCORDING TO FRANCHISE REGISTRATION REQUEST OF CUSTOMER, AND DEVICE AND SYSTEM THEREFOR**

(30) Priority: 03.08.2012 KR 20120085142
(71) Applicant: Oh, Se-kyu, Seoul 150-935 (KR)
(72) Inventor: Oh, Se-kyu, Seoul 150-935 (KR)
(74) Representative: Munk, Ludwig Hubert
(86) International application number: PCT/KR2013/005527
(87) International publication number: WO 2014/021551

(57) **Abstract**

The present invention relates to a membership processing method performed according to franchise registration request by customer, and device and system therefor, and the membership processing method comprises the steps of: enabling a franchise information processing device to receive, from a client terminal, franchise registration request information of a customer for registering a particular company as a franchise and to transfer the franchise registration request information to a corresponding company terminal; mapping corresponding company information with information on the customer who has requested the franchise registration, depending on whether the franchise registration received from the company terminal is approved, and classifying and registering, in a database, the company information as the franchise of the corresponding customer; receiving a notification message including customer benefit information from a predetermined company terminal; and transferring the notification message including the customer benefit information to a client terminal of the corresponding customer who has requested the registration of the company as the franchise by referring to the customer information mapped to the corresponding franchise, if the company which has transmitted the notification message is a registered franchise. Thus, the company can efficiently promote and sell products and manage customers, and a customer can actively designate a desired company as a franchise such that the customer can be provided with improved convenience and better services.

## Description

Membership Processing Method Performed according to Franchise Registration Request of Customer, and Device and System therefor

### TECHNICAL FIELD

The present invention relates to a method for processing membership in response to an affiliated store registration request by a customer, and a device and a system therefor. More particularly, the present invention relates to a method for processing membership in response to an affiliated store registration request by a customer, in which a predetermined affiliated store information processing apparatus interconnects a customer who has requested the affiliated store registration and a shop that has becomes an affiliated store, classifies and registers the corresponding shop as an affiliated store of the corresponding customer in the database, and batch transmits (or pushes) a notification message including customer benefit information (e.g., coupon information, commodity discount information) received from a predetermined affiliated store terminal to client terminals connected to the corresponding affiliated store, and a device and a system therefor.

### BACKGROUND ART

In general, a main shop invites affiliated stores and each affiliated store offers information such as product discount benefits and the like to customers.

A related art will be described hereinafter.

That is, the related art (Korean Patent Application No. 10-2004-0062955 entitled "System and Method for Providing Information of Customer's Purchase Pattern to Affiliated Stores") relates to a customer information providing system and method for analyzing a purchase pattern of a customer from affiliated store usage information, generating customer management information, and providing the customer management information to an affiliated store.

The customer information providing system in accordance with the related art includes: a customer identification means for verifying a membership of a customer at a visiting affiliated store; an affiliated store terminal for transmitting a customer information request after receiving the customer identification means of the customer, receiving customer management information generated by analyzing the purchase pattern of the customer, and transmitting the affiliated store usage information of the customer for the affiliated store; and a customer information providing server for transmitting and receiving data to/from the affiliated store terminal through a network, analyzing a purchase preference style of the customer from the affiliated store usage information received thereby from the affiliated store terminal, generating customer management information and transmitting the customer management information to the affiliated store terminal.

In accordance with the related art, the customer information providing system has a marketing effect in that it provides the customer management information generated by analyzing the purchase pattern of the customer using the affiliated store usage information of the customer to the affiliated store terminal so that the affiliated store can offer a customized service based on the purchase pattern of the customer to the customer.

Besides this related art, a main shop generally invites affiliated stores directly and each affiliated store offers information on product discount benefits and the like to the customers. For this reason, there occurs a problem in that the selection of the affiliated store by the customers is made passively irrespective of the customers' intentions and it is not easy for the affiliated store to promote products and gather the customer information.

### DISCLOSURE

### TECHNICAL PROBLEM

Accordingly, the present invention has been made to solve the aforementioned problems occurring in the prior art, and it is an object of the present invention to provide a method for processing membership in response to an affiliated store registration request by a customer, in which a predetermined affiliated store information processing apparatus interconnects a customer who has requested the affiliated store registration and a shop that has becomes an affiliated store, classifies and registers the corresponding shop as an affiliated store of the corresponding customer in the database, and batch transmits (or pushes) a notification message including customer benefit information (e.g., coupon information, commodity discount information) received from a predetermined affiliated store terminal to client terminals connected to the corresponding affiliated store so that the shop can efficiently promote and sell products and manage customers, and the customer can actively designate a desired shop as an affiliated store, thereby providing improved convenience and better services to the customer, and a device and a system therefor.

### TECHNICAL SOLUTION

To achieve the above object, in one aspect, the present invention provides a method for processing membership in response to an affiliated store registration request by a customer, the method including the steps of: allowing an affiliated store information processing apparatus to receive, from a client terminal, affiliated store registration request information of a customer, which is required to register a specific shop as an affiliated store, and transmit the received affiliated store registration request information to a corresponding shop terminal; allowing the affiliated store information processing apparatus to map information on the corresponding shop with information on the customer who has requested the affiliated store registration, in response to a signal indicating whether the affiliated store registration has been approved, which is received from the shop terminal, and classify and register the corresponding shop as an affiliated store of the corresponding customer in a database; allowing the affiliated store information processing apparatus to receive a notification message including customer benefit information from a predetermined shop terminal; and allowing the affiliated store information processing apparatus to transmit the notification message including customer benefit information to a client terminal of the corresponding customer who has requested the registration of the shop as the affiliated store by referring to the customer information mapped to the corresponding affiliated store, if the shop which has transmitted the notification message is a registered affiliated store.

Preferably, the step of allowing an affiliated store information processing apparatus to transmit the received affiliated store registration request information to a corresponding shop terminal may include a step of: allowing the affiliated store information processing apparatus to compare the number of affiliated store registration requests for the corresponding shop with a preset number, and as a result of the comparison, if the number of affiliated store registration requests for the corresponding shop exceeds the preset number, allowing the affiliated store information processing apparatus to transmit the affiliated store registration request information of the customer to the corresponding shop terminal, and if the number of affiliated store registration requests for the corresponding shop is less than the preset number, allowing the affiliated store information processing apparatus to hold the transmission of the affiliated store registration request information of the customer to the corresponding shop terminal.

In addition, the step of classifying and registering the corresponding shop as an affiliated store of the corresponding customer may include a step of: if the affiliated store information processing apparatus receives a signal indicating that the affiliated store registration has been approved from the shop terminal, allowing the affiliated store information processing apparatus to map information on the corresponding shop with information on the customer who has requested the affiliated store registration, and classify and register the corresponding shop as an affiliated store of the corresponding customer in the database, and if the affiliated store information processing apparatus does not receive a signal indicating that the affiliated store registration has been approved from the shop terminal, allowing the affiliated store information processing apparatus to map information on the corresponding shop with information on the customer who has requested the affiliated store registration, and classify and register the corresponding shop as a non-approved affiliated store of the corresponding customer in the database.

Preferably, the step of classifying and registering the corresponding shop as an affiliated store of the corresponding customer may further include a step of, if the corresponding shop is classified and registered as an affiliated store or a non-approved affiliated store of the corresponding customer, allowing the affiliated store information processing apparatus to push the affiliated store information of the customer to a designated website so that the corresponding customer can have the feedback in real time with whether or not the information requested by himself or herself has been processed normally through the website.

In addition, the affiliated store registration request information may include the corresponding customer's ID, comment, e-mail information, terminal number, message reception agreement data and e-mail reception agreement data, and a shop's name, telephone number, address and business type information, which are needed to request the affiliated store registration, and the customer benefit information may include any one of coupon information and commodity discount information.

To achieve the above object, in another aspect, the present invention provides a device for processing membership in response to an affiliated store registration request by a customer, the device including: an information processing unit for receiving, from a client terminal, affiliated store registration request information of a customer, which is required to register a specific shop as an affiliated store, and transmitting the received affiliated store registration request information to a corresponding shop terminal; an affiliated store registering unit for mapping information on the corresponding shop with information on the customer who has requested the affiliated store registration, in response to a signal indicating whether the affiliated store registration has been approved, which is received from the shop terminal, and classifying and registering the corresponding shop as an affiliated store of the corresponding customer in a database; a message collecting unit for receiving a notification message including customer benefit information from a predetermined shop terminal; and a membership processing unit for transmitting the notification message including customer benefit information to a client terminal of the corresponding customer who has requested the registration of the shop as the affiliated store by referring to the customer information mapped to the corresponding affiliated store, if the shop which has transmitted the notification message is a registered affiliated store.

Preferably, the information processing unit may compare the number of affiliated store registration requests for the corresponding shop with a preset number, and as a result of the comparison, if the number of affiliated store registration requests for the corresponding shop exceeds the preset number, the information processing unit may transmit the affiliated store registration request information of the customer to the corresponding shop terminal, and if the number of affiliated store registration requests for the corresponding shop is less than the preset number, the information processing unit may hold the transmission of the affiliated store registration request information of the customer to the corresponding shop terminal.

Besides, if the affiliated store registering unit receives a signal indicating that the affiliated store registration has been approved from the shop terminal, the affiliated store registering unit may map information on the corresponding shop with information on the customer who has requested the affiliated store registration, and classify and register the corresponding shop as an affiliated store of the corresponding customer in the database, and if the affiliated store registering unit does not receive a signal indicating that the affiliated store registration has been approved from the shop terminal, the affiliated store registering unit may map information on the corresponding shop with information on the customer who has requested the affiliated store registration, and classify and register the corresponding shop as a non-approved affiliated store of the corresponding customer in the database.

Preferably, the membership processing device may further include a feedback module for pushing the affiliated store information of the customer to a designated website if the corresponding shop is classified and registered as an affiliated store or a non-approved affiliated store of the corresponding customer so that the corresponding customer can have the feedback in real time with whether or not the information requested by himself or herself has been processed normally through the website.

Moreover, the affiliated store registration request information may include the corresponding customer's ID, comment, e-mail information, terminal number, message reception agreement data and e-mail reception agreement data, and a shop's name, telephone number, address and business type information, which are needed to request the affiliated store registration, and the customer benefit information may include any one of coupon information and commodity discount information.

To achieve the above object, in still another aspect, the present invention provides a system for processing membership in response to an affiliated store registration request by a customer, the system including: a client terminal for inputting affiliated store registration request information of a customer, which is required to register a specific shop as an affiliated store; and an affiliated store information processing apparatus for transmitting the affiliated store registration request information received thereby from the client terminal to a corresponding shop terminal, mapping information on the corresponding shop with information on the customer who has requested the affiliated store registration, in response to a signal indicating whether the affiliated store registration has been approved, which is received from the shop terminal and classifying and registering the corresponding shop as an affiliated store of the corresponding customer in a database, receiving a notification message including customer benefit information from a predetermined shop terminal, and transmitting the notification message including customer benefit information to a client terminal of the corresponding customer who has requested the registration of the shop as the affiliated store by referring to the customer information mapped to the corresponding affiliated store, if the shop which has transmitted the notification message is a registered affiliated store.

Preferably, the affiliated store information processing apparatus may compare the number of affiliated store registration requests for the corresponding shop with a preset number, and as a result of the comparison, if the number of affiliated store registration requests for the corresponding shop exceeds the preset number, the affiliated store information processing apparatus may transmit the affiliated store registration request information of the customer to the corresponding shop terminal, and if the number of affiliated store registration requests for the corresponding shop is less than the preset number, the affiliated store information processing apparatus may hold the transmission of the affiliated store registration request information of the customer to the corresponding shop terminal.

Further, if the affiliated store information processing apparatus receives a signal indicating that the affiliated store registration has been approved from the shop terminal, the affiliated store information processing apparatus may map information on the corresponding shop with information on the customer who has requested the affiliated store registration, and classify and register the corresponding shop as an affiliated store of the corresponding customer in the database, and if the affiliated store information processing apparatus does not receive a signal indicating that the affiliated store registration has been approved from the shop terminal, the affiliated store information processing apparatus may map information on the corresponding shop with information on the customer who has requested the affiliated store registration, and classify and register the corresponding shop as a non-approved affiliated store of the corresponding customer in the database.

Preferably, the affiliated store information processing apparatus may push the affiliated store information of the customer to a designated website if the corresponding shop is classified and registered as an affiliated store or a non-approved affiliated store of the corresponding customer so that the corresponding customer can have the feedback in real time with whether or not the information requested by himself or herself has been processed normally through the website.

In addition, the affiliated store registration request information may include the corresponding customer's ID, comment, e-mail information, terminal number, message reception agreement data and e-mail reception agreement data, and a shop's name, telephone number, address and business type information, which are needed to request the affiliated store registration, and the customer benefit information may include any one of coupon information and commodity discount information.

### ADVANTAGEOUS EFFECT

The present invention has the following advantageous effects.

First, the present invention enables a predetermined affiliated store information processing apparatus to interconnect a customer who has requested the affiliated store registration and a shop that has becomes an affiliated store, classify and register the corresponding shop as an affiliated store of the corresponding customer in the database, and batch transmit (or push) a notification message including customer benefit information (e.g., coupon information, commodity discount information) received from a predetermined affiliated store terminal to client terminals connected to the corresponding affiliated store so that the shop can efficiently promote and sell products and manage customers, and the customer can actively designate a desired shop as an affiliated store, thereby providing improved convenience and better services to the customer.

Second, the present invention enables a predetermined affiliated store information processing apparatus to compare the number of affiliated store registration requests for the corresponding shop with a preset number, and as a result of the comparison, if the number of affiliated store registration requests for the corresponding shop exceeds the preset number, the affiliated store information processing apparatus transmits the affiliated store registration request information of the customer to the corresponding shop terminal, and if the number of affiliated store registration requests for the corresponding shop is less than the preset number, the affiliated store information processing apparatus holds the transmission of the affiliated store registration request information of the customer to the corresponding shop terminal, thereby achieving efficient data management and network operation.

Third, the present invention enables a predetermined affiliated store information processing apparatus to push the affiliated store information of the customer to a designated website if the corresponding shop is classified and registered as an affiliated store or a non-approved affiliated store of the corresponding customer so that the corresponding customer can have the feedback in real time with whether or not the information requested by himself or herself has been processed normally through the website.

### BRIEF DESCRIPTION OF THE DRAWINGS

The above objects, other features and advantages of the present invention will become more apparent by describing the preferred embodiments thereof with reference to the accompanying drawings, in which:
Fig. 1 is a block diagram illustrating the configuration of a system for processing membership in response to an affiliated store registration request by a customer in accordance with the present invention;
Fig. 2 is a block diagram illustrating the configuration of a device for processing membership in response to an affiliated store registration request by a customer in accordance with the present invention;
Fig. 3 is a flow chart sequentially illustrating the operation of a system for processing membership in response to an affiliated store registration request by a customer in accordance with the present invention;
Fig. 4 is a flow chart sequentially illustrating the operation of a device for processing membership in response to an affiliated store registration request by a customer in accordance with the present invention;
Fig. 5 is a view illustrating an example of affiliated store registration request information in accordance with the present invention;
Fig. 6 is a view illustrating an example of affiliated store information displayed on a predetermined website (herein, 'my page') in accordance with the present invention; and
Fig. 7 is a view illustrating an example of a notification message including customer benefit information (e.g., coupon information) sent to a customer in accordance with the present invention.

### PREFERRED EMBODIMENTS OF THE INVENTION

Now, preferred embodiments of the present invention will be described in detail with reference to the accompanying drawings. The matters defined in the description, such as the detailed construction and elements, are nothing but specific details provided to assist those of ordinary skill in the art in a comprehensive understanding of the invention, and the present invention is not limited to the embodiments disclosed hereinafter.

In order to definitely describe the present invention, a portion having no relevant to the description will be omitted, and through the specification, like elements are designated by like reference numerals.

In the specification and the claims, when a portion includes an element, it is meant to include other elements, but not exclude the other elements unless otherwise specifically stated herein.

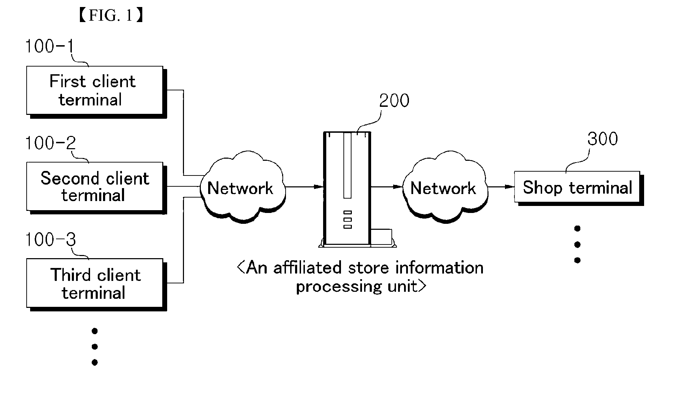

Fig. 1 is a block diagram illustrating the configuration of a system for processing membership in response to an affiliated store registration request by a customer in accordance with the present invention.

As shown in Fig. 1, the membership processing system of the present invention includes a plurality of client terminals 100-1,..., and 100-N, which request registration of an affiliated store, an affiliated store information processing apparatus 200 configured to interconnect a customer who has requested the affiliated store registration and a shop that has become an affiliated store, and classify and register the corresponding shop as an affiliated store of the customer, and at least one shop terminal 300.

Herein, the client terminals 100-1,..., and 100-N are client terminals (e.g., PCs, cellular phones, smart phones, tablet PCs, etc.) that are connected to the affiliated store information processing apparatus 200 through a wired or wireless network. The client terminals 100-1,..., and 100-N gain access to the affiliated store information processing apparatus 200 through the wired or wireless network connected thereto by a user's key manipulation, and transmit affiliated store registration request information of a customer, which is inputted or selected by the customer, to the affiliated store information processing apparatus 200. In other words, a corresponding one of the client terminals 100-1,..., and 100-N transmits affiliated store registration request information (e.g., a corresponding customer's ID, comment, e-mail information, terminal number, message reception agreement data and e-mail reception agreement data, and a shop's name, telephone number, address and business type information, etc., which are needed to request the affiliated store registration) of a customer, which is required to register a specific shop as an affiliated store, to the affiliated store information processing apparatus 200.

The affiliated store information processing apparatus 200 receives the affiliated store registration request information of the customer from the corresponding client terminal 100-1,..., or 100-N and transmits the received affiliated store registration request information to a corresponding shop terminal 300. Then, if the affiliated store information processing apparatus 200 receives a signal indicating that the affiliated store registration has been approved from the shop terminal 300, the affiliated store information processing apparatus 200 maps information on the corresponding shop with information on the customer who has requested the affiliated store registration, and classifies and registers the corresponding shop as an affiliated store of the corresponding customer in a database. On the contrary, if the affiliated store information processing apparatus 200 does not receive a signal indicating that the affiliated store registration has been approved from the shop terminal 300, the affiliated store information processing apparatus 200 maps information on the corresponding shop with information on the customer who has requested the affiliated store registration, and classifies and registers the corresponding shop as a non-approved affiliated store of the corresponding customer in a database. Thereafter, the affiliated store information processing apparatus 200 receives a notification message including customer benefit information from a predetermined shop terminal 300. Then, if the shop which has transmitted the notification message is a registered affiliated store, the affiliated store information processing apparatus 200 transmits or pushes the notification message including customer benefit information (e.g., coupon information, commodity discount information, etc.) to a client terminal of the corresponding customer who has requested the registration of the shop as the affiliated store by referring to the customer information mapped to the corresponding affiliated store.

Meanwhile, for the purpose of efficient management of data, the affiliated store information processing apparatus 200 compares the number of affiliated store registration requests for the corresponding shop with a preset number. As a result of the comparison, if the number of affiliated store registration requests for the corresponding shop exceeds the preset number, the affiliated store information processing apparatus 200 transmits the affiliated store registration request information of the customer to the corresponding shop terminal 300. On the contrary, if the number of affiliated store registration requests for the corresponding shop is less than the preset number, the affiliated store information processing apparatus 200 may hold the transmission of the affiliated store registration request information of the customer to the corresponding shop terminal 300. In addition, when the classification and registration of a predetermined shop as an affiliated store or a non-approved affiliated store of a specific customer is completed, the affiliated store information processing apparatus 200 pushes the affiliated store information of the customer to a designated website so that the corresponding customer can have the feedback in real time with whether or not the information requested by himself or herself has been processed normally through the website.

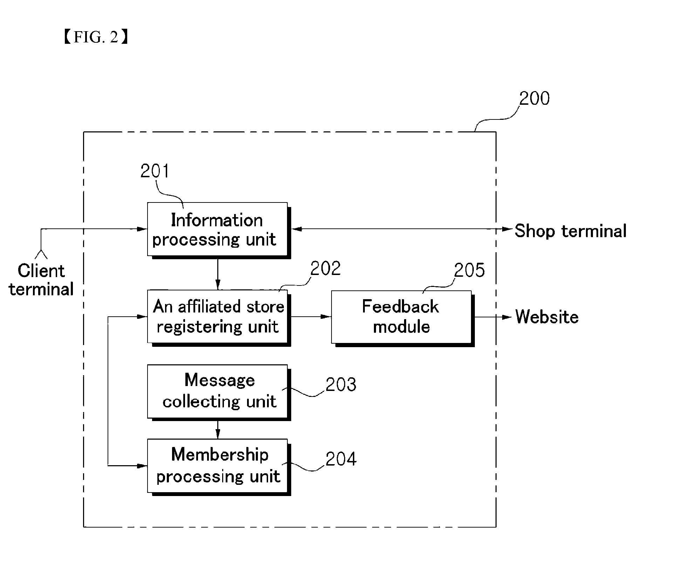

Hereinafter, a device for processing membership in response to an affiliated store registration request by a customer, which is built in the affiliated store information processing apparatus constituting the system of Fig. 1, will be described with reference to Fig. 2.

Fig. 2 is a block diagram illustrating the configuration of a device for processing membership in response to an affiliated store registration request by a customer in accordance with the present invention.

As shown in Fig. 2, the membership processing device of the present invention roughly includes an information processing unit 201, an affiliated store registering unit 202, a message collecting unit 203, and a membership processing unit 204, and further includes a feedback module 205.

Herein, the information processing unit 201 includes a communication interface module built therein. The information processing unit 201 receives affiliated store registration request information (e.g., a corresponding customer's ID, comment, e-mail information, terminal number, message reception agreement data and e-mail reception agreement data, and a shop's name, telephone number, address and business type information, etc., which are needed to request the affiliated store registration) of a customer, which is required to register a specific shop as an affiliated store from a client terminal using the communication interface module, and transmits the received affiliated store registration request information to a corresponding shop terminal 300. In particular, for the purpose of efficient management of data, the information processing unit 201 compares the number of affiliated store registration requests for the corresponding shop with a preset number. As a result of the comparison, if the number of affiliated store registration requests for the corresponding shop exceeds the preset number, the information processing unit 201 transmits the affiliated store registration request information of the customer to the corresponding shop terminal 300. On the contrary, if the number of affiliated store registration requests for the corresponding shop is less than the preset number, the information processing unit 201 may hold the transmission of the affiliated store registration request information of the customer to the corresponding shop terminal 300.

The affiliated store registering unit 202 maps information on the corresponding shop with information on the customer who has requested the affiliated store registration, in response to a signal indicating whether the affiliated store registration has been approved, which is received from the shop terminal, and classifies and registers the corresponding shop as an affiliated store of the corresponding customer in a database. In other words, if the affiliated store registering unit 202 receives a signal indicating that the affiliated store registration has been approved from the shop terminal 300, the affiliated store registering unit 202 maps information on the corresponding shop with information on the customer who has requested the affiliated store registration, and classifies and registers the corresponding shop as an affiliated store of the corresponding customer in the database. On the contrary, if the affiliated store registering unit 202 does not receive a signal indicating that the affiliated store registration has been approved from the shop terminal 300, the affiliated store registering unit 202 maps information on the corresponding shop with information on the customer who has requested the affiliated store registration, and classifies and registers the corresponding shop as a non-approved affiliated store of the corresponding customer in the database.

The message collecting unit 203 receives a notification message including customer benefit information (e.g., coupon information, commodity discount information, etc.) according to each shop from a predetermined shop terminal.

The membership processing unit 204 transmits or pushes the notification message including customer benefit information to a client terminal of the corresponding customer who has requested the registration of the shop as the affiliated store by referring to the customer information mapped to the corresponding affiliated store if the shop which has transmitted the notification message is a registered affiliated store.

When the classification and registration of a predetermined shop as an affiliated store or a non-approved affiliated store of a specific customer is completed, the feedback module 205 pushes the affiliated store information of the customer to a designated website so that the corresponding customer can have the feedback in real time with whether or not the information requested by himself or herself has been processed normally through the website.

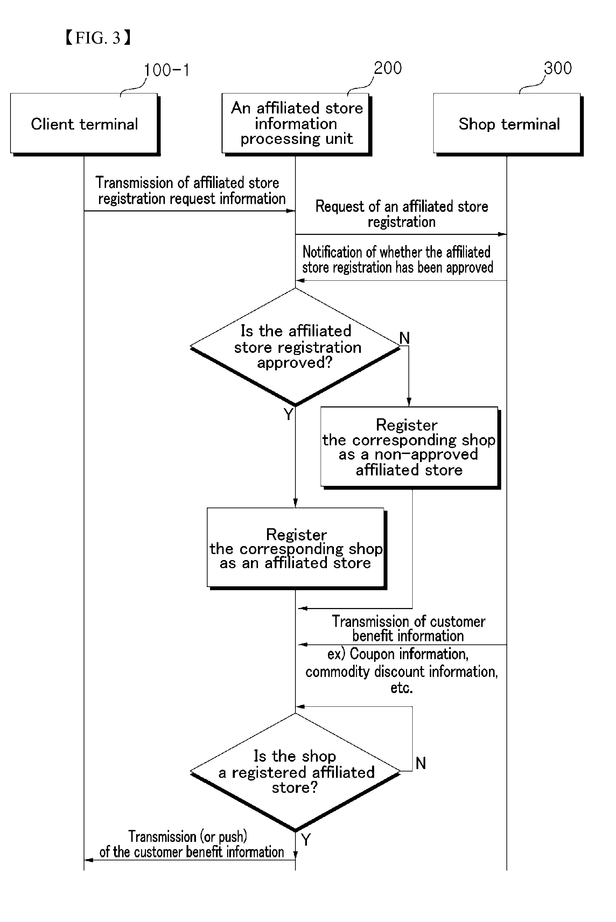

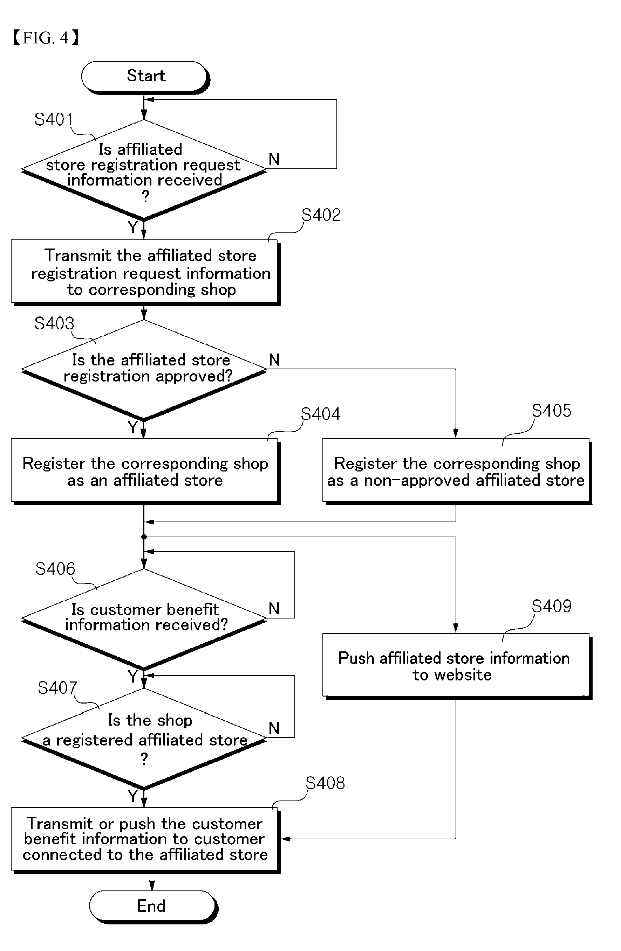

Hereinafter, the device for processing membership in response to an affiliated store registration request by a customer in accordance with the present invention as shown Fig. 2 will be described with reference to Figs. 3 and 4.

Fig. 3 is a flow chart sequentially illustrating the operation of a system for processing membership in response to an affiliated store registration request by a customer in accordance with the present invention, and Fig. 4 is a flow chart sequentially illustrating the operation of a device for processing membership in response to an affiliated store registration request by a customer in accordance with the present invention.

As shown in Figs. 3 and 4, first, a client terminal 100-1 transmits affiliated store registration request information inputted or selected by a customer to the affiliated store information processing apparatus 200.

In other words, the client terminal 100-1 transmits affiliated store registration request information (e.g., a corresponding customer's ID, comment, e-mail information, terminal number, message reception agreement data and e-mail reception agreement data, and a shop's name, telephone number, address and business type information, etc., which are needed to request the affiliated store registration) of a customer, which is required to register a specific shop as an affiliated store to the affiliated store information processing apparatus 200.

The client terminal 100-1 is a client terminal (e.g., PC, cellular phone, smart phone, tablet PC or the like) that is connected to the affiliated store information processing apparatus 200 through a wired or wireless network. The client terminal 100-1 gains access to the affiliated store information processing apparatus 200 through the wired or wireless network connected thereto by a user's key manipulation, and transmits affiliated store registration request information of a customer, which is inputted or selected by the customer, to the affiliated store information processing apparatus 200.

Subsequently, the affiliated store information processing apparatus 200 transmits the affiliated store registration request information received thereby from the client terminal 100-1 to a corresponding shop terminal 300 (S401 and S402).

In this case, for the purpose of efficient management of data, the affiliated store information processing apparatus 200 compares the number of affiliated store registration requests for the corresponding shop with a preset number. As a result of the comparison, if the number of affiliated store registration requests for the corresponding shop exceeds the preset number, the affiliated store information processing apparatus 200 transmits the affiliated store registration request information of the customer to the corresponding shop terminal 300. On the contrary, if the number of affiliated store registration requests for the corresponding shop is less than the preset number, the affiliated store information processing apparatus 200 may hold the transmission of the affiliated store registration request information of the customer to the corresponding shop terminal 300.

Thereafter, the affiliated store information processing apparatus 200 maps information on the corresponding shop with information on the customer who has requested the affiliated store registration, in response to a signal indicating whether the affiliated store registration has been approved, which is received from the shop terminal 300, and classify and register the corresponding shop as an affiliated store of the corresponding customer in a database.

In other words, if the affiliated store information processing apparatus 200 receives a signal indicating that the affiliated store registration has been approved from the shop terminal 300, the affiliated store information processing apparatus 200 maps information on the corresponding shop with information on the customer who has requested the affiliated store registration, and classifies and registers the corresponding shop as an affiliated store of the corresponding customer in the database.

Contrarily, if the affiliated store information processing apparatus 200 does not receive a signal indicating that the affiliated store registration has been approved from the shop terminal 300, the affiliated store information processing apparatus 200 maps information on the corresponding shop with information on the customer who has requested the affiliated store registration, and classifies and registers the corresponding shop as a non-approved affiliated store of the corresponding customer in the database (S403 to S405).

Next, the affiliated store information processing apparatus 200 receives a notification message including customer benefit information from a predetermined shop terminal 300 (S406).

Then, if the shop which has transmitted the notification message is a registered affiliated store, the affiliated store information processing apparatus 200 transmits or pushes the notification message including customer benefit information (e.g., coupon information, commodity discount information, etc.) to a client terminal of the corresponding customer who has requested the registration of the shop as the affiliated store by referring to the customer information mapped to the corresponding affiliated store (S407 and S408).

In the meantime, when the classification and registration of a predetermined shop as an affiliated store or a non-approved affiliated store of a specific customer is completed, the affiliated store information processing apparatus 200 pushes the affiliated store information of the customer to a designated website so that the corresponding customer can have the feedback in real time with whether or not the information requested by himself or herself has been processed normally through the website (S409).

As such, the present invention enables a predetermined affiliated store information processing apparatus to interconnect a customer who has requested the affiliated store registration and a shop that has becomes an affiliated store, classify and register the corresponding shop as an affiliated store of the corresponding customer in the database, and batch transmit (or push) a notification message including customer benefit information (e.g., coupon information, commodity discount information) received from a predetermined affiliated store terminal to client terminals connected to the corresponding affiliated store so that the shop can efficiently promote and sell products and manage customers, and the customer can actively designate a desired shop as an affiliated store, thereby providing improved convenience and better services to the customer.

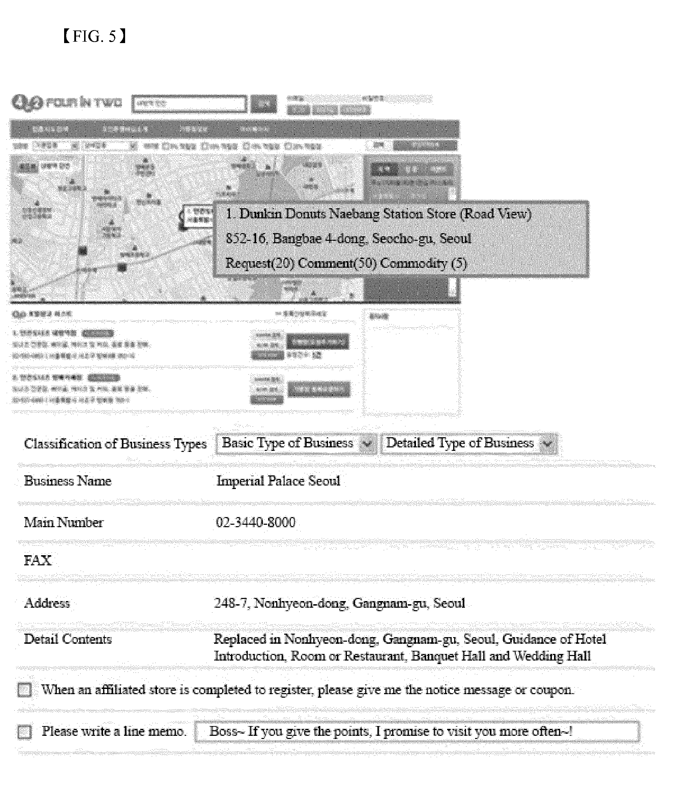

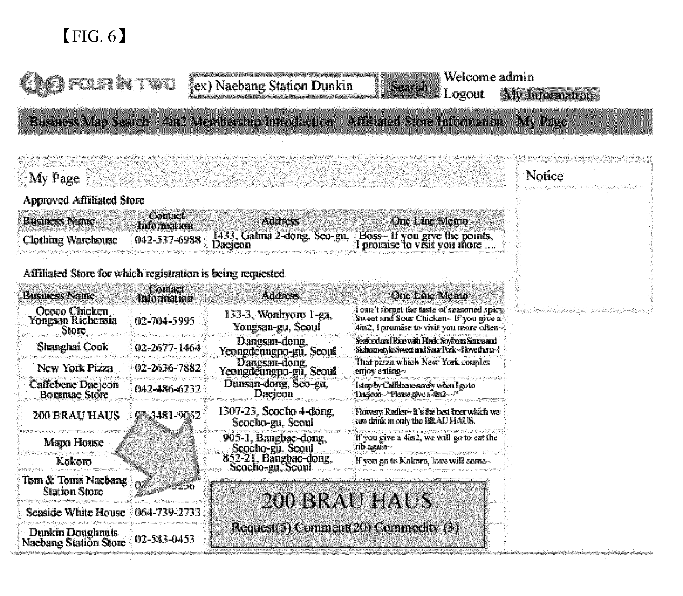

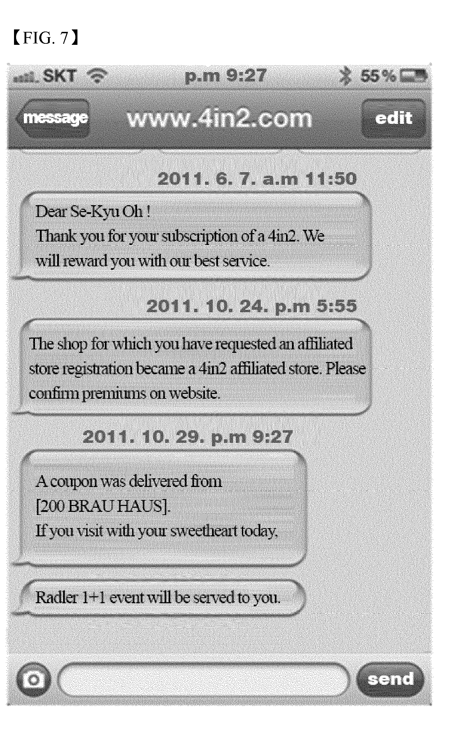

Fig. 5 is a view illustrating an example of affiliated store registration request information in accordance with the present invention, Fig. 6 is a view illustrating an example of affiliated store information displayed on a predetermined website (herein, 'my page') in accordance with the present invention, and Fig. 7 is a view illustrating an example of a notification message including customer benefit information (e.g., coupon information) sent to a customer in accordance with the present invention.

As shown in Fig. 5, the client terminal gains access to the affiliated store information processing apparatus connected thereto through a predetermined wired or wireless network, and transmits affiliated store registration request information of a customer, which is inputted or selected by the customer, to the affiliated store information processing apparatus 200. In this case, the affiliated store registration request information of a customer, which is required to register a specific shop as an affiliated store may include, for example, a corresponding customer's ID, comment, e-mail information, terminal number, message reception agreement data and e-mail reception agreement data, and a shop's name, telephone number, address and business type information, etc., which are needed to request the affiliated store registration.

Also, as shown in Fig. 6, if the affiliated store information processing apparatus receives a signal indicating that the affiliated store registration has been approved from the shop terminal, the affiliated store information processing apparatus maps information on the corresponding shop with information on the customer who has requested the affiliated store registration, and classifies and registers the corresponding shop as an affiliated store of the corresponding customer in a database. On the contrary, if the affiliated store information processing apparatus does not receive a signal indicating that the affiliated store registration has been approved from the shop terminal, the affiliated store information processing apparatus maps information on the corresponding shop with information on the customer who has requested the affiliated store registration, and classifies and registers the corresponding shop as a non-approved affiliated store of the corresponding customer in a database. In addition, when the classification and registration of a predetermined shop as an affiliated store or a non-approved affiliated store of a specific customer is completed, the affiliated store information processing apparatus pushes the affiliated store information of the customer to a designated website (herein, 'my page') so that the corresponding customer can have the feedback in real time with whether or not the information requested by himself or herself has been processed normally through the website. The affiliated store information in accordance with the present invention is largely classified into information on an approved affiliated store and information on a non-approved affiliated store, i.e., information on an affiliated store for which registration is being requested. The classified affiliated store information may be composed of a corresponding shops' name, contact number, address, message, etc.

Meanwhile, as shown in Fig. 7, the affiliated store information processing apparatus receives a notification message including customer benefit information from a predetermined shop terminal. Then, if the shop which has transmitted the notification message is a registered affiliated store, the affiliated store information processing apparatus transmits or pushes the notification message including customer benefit information (e.g., coupon information, commodity discount information, etc.) to a client terminal of the corresponding customer who has requested the registration of the shop as the affiliated store by referring to the customer information mapped to the corresponding affiliated store.

In Fig. 7, there is shown an example of a notification message 'A coupon was delivered from [200 BRAU HAUS]. If you visit with your sweetheart today, Radler 1+1 will be served to you'.

### INDUSTRIAL APPLICABILITY

The present invention can be applied to all the affiliated store systems in which a wide variety of benefits based on membership are offered to customers.

While the present invention has been described in connection with the specific embodiments illustrated in the drawings, they are merely illustrative, and the invention is not limited to these embodiments. It is to be understood that various equivalent modifications and variations of the embodiments can be made by a person having an ordinary skill in the art without departing from the spirit and scope of the present invention. Therefore, the true technical scope of the present invention should not be defined by the above-mentioned embodiments but should be defined by the appended claims and equivalents thereof.

## Claims

1. A method for processing membership in response to an affiliated store registration request by a customer, the method comprising the steps of:
allowing an affiliated store information processing apparatus to receive, from a client terminal, affiliated store registration request information of a customer, which is required to register a specific shop as an affiliated store, and transmit the received affiliated store registration request information to a corresponding shop terminal;
allowing the affiliated store information processing apparatus to map information on the corresponding shop with information on the customer who has requested the affiliated store registration, in response to a signal indicating whether the affiliated store registration has been approved, which is received from the shop terminal, and classify and register the corresponding shop as an affiliated store of the corresponding customer in a database;
allowing the affiliated store information processing apparatus to receive a notification message including customer benefit information from a predetermined shop terminal; and
allowing the affiliated store information processing apparatus to transmit the notification message including customer benefit information to a client terminal of the corresponding customer who has requested the registration of the shop as the affiliated store by referring to the customer information mapped to the corresponding affiliated store, if the shop which has transmitted the notification message is a registered affiliated store.

2. The method of claim 1, wherein the step of allowing an affiliated store information processing apparatus to transmit the received affiliated store registration request information to a corresponding shop terminal comprises a step of allowing the affiliated store information processing apparatus to compare the number of affiliated store registration requests for the corresponding shop with a preset number, and as a result of the comparison, if the number of affiliated store registration requests for the corresponding shop exceeds the preset number, allowing the affiliated store information processing apparatus to transmit the affiliated store registration request information of the customer to the corresponding shop terminal, and if the number of affiliated store registration requests for the corresponding shop is less than the preset number, allowing the affiliated store information processing apparatus to hold the transmission of the affiliated store registration request information of the customer to the corresponding shop terminal.

3. The method of claim 1, wherein the step of classifying and registering the corresponding shop as an affiliated store of the corresponding customer comprises a step of: if the affiliated store information processing apparatus receives a signal indicating that the affiliated store registration has been approved from the shop terminal, allowing the affiliated store information processing apparatus to map information on the corresponding shop with information on the customer who has requested the affiliated store registration, and classify and register the corresponding shop as an affiliated store of the corresponding customer in a database, and if the affiliated store information processing apparatus does not receive a signal indicating that the affiliated store registration has been approved from the shop terminal, allowing the affiliated store information processing apparatus to map information on the corresponding shop with information on the customer who has requested the affiliated store registration, and classify and register the corresponding shop as a non-approved affiliated store of the corresponding customer in a database.

4. The method of claim 3, wherein the step of classifying and registering the corresponding shop as an affiliated store of the corresponding customer further comprises a step of, if the corresponding shop is classified and registered as an affiliated store or a non-approved affiliated store of the corresponding customer, allowing the affiliated store information processing apparatus to push the affiliated store information of the customer to a designated website so that the corresponding customer can have the feedback in real time with whether or not the information requested by himself or herself has been processed normally through the website.

5. The method of claim 1, wherein the affiliated store registration request information comprises the corresponding customer's ID, comment, e-mail information, terminal number, message reception agreement data and e-mail reception agreement data, and a shop's name, telephone number, address and business type information, which are needed to request the affiliated store registration, and
the customer benefit information comprises any one of coupon information and commodity discount information.

6. A device for processing membership in response to an affiliated store registration request by a customer, the device comprising:
an information processing unit for receiving, from a client terminal, affiliated store registration request information of a customer, which is required to register a specific shop as an affiliated store, and transmitting the received affiliated store registration request information to a corresponding shop terminal;
an affiliated store registering unit for mapping information on the corresponding shop with information on the customer who has requested the affiliated store registration, in response to a signal indicating whether the affiliated store registration has been approved, which is received from the shop terminal, and classifying and registering the corresponding shop as an affiliated store of the corresponding customer in a database;
a message collecting unit for receiving a notification message including customer benefit information from a predetermined shop terminal; and
a membership processing unit for transmitting the notification message including customer benefit information to a client terminal of the corresponding customer who has requested the registration of the shop as the affiliated store by referring to the customer information mapped to the corresponding affiliated store, if the shop which has transmitted the notification message is a registered affiliated store.

7. The device according to claim 6, wherein the information processing unit compares the number of affiliated store registration requests for the corresponding shop with a preset number, and as a result of the comparison, if the number of affiliated store registration requests for the corresponding shop exceeds the preset number, the information processing unit transmits the affiliated store registration request information of the customer to the corresponding shop terminal, and if the number of affiliated store registration requests for the corresponding shop is less than the preset number, the information processing unit holds the transmission of the affiliated store registration request information of the customer to the corresponding shop terminal.

8. The device according to claim 6, wherein if the affiliated store registering unit receives a signal indicating that the affiliated store registration has been approved from the shop terminal, the affiliated store registering unit maps information on the corresponding shop with information on the customer who has requested the affiliated store registration, and classifies and registers the corresponding shop as an affiliated store of the corresponding customer in the database, and if the affiliated store registering unit does not receive a signal indicating that the affiliated store registration has been approved from the shop terminal, the affiliated store registering unit maps information on the corresponding shop with information on the customer who has requested the affiliated store registration, and classifies and registers the corresponding shop as a non-approved affiliated store of the corresponding customer in the database.

9. The device according to claim 8, further comprising a feedback module for pushing the affiliated store information of the customer to a designated website if the corresponding shop is classified and registered as an affiliated store or a non-approved affiliated store of the corresponding customer so that the corresponding customer can have the feedback in real time with whether or not the information requested by himself or herself has been processed normally through the website.

10. The device according to claim 6, wherein the affiliated store registration request information comprises the corresponding customer's ID, comment, e-mail information, terminal number, message reception agreement data and e-mail reception agreement data, and a shop's name, telephone number, address and business type information, which are needed to request the affiliated store registration, and
the customer benefit information comprises any one of coupon information and commodity discount information.

11. A system for processing membership in response to an affiliated store registration request by a customer, the system comprising:
a client terminal for inputting affiliated store registration request information of a customer, which is required to register a specific shop as an affiliated store; and
an affiliated store information processing apparatus for transmitting the affiliated store registration request information received thereby from the client terminal to a corresponding shop terminal, mapping information on the corresponding shop with information on the customer who has requested the affiliated store registration, in response to a signal indicating whether the affiliated store registration has been approved, which is received from the shop terminal and classifying and registering the corresponding shop as an affiliated store of the corresponding customer in a database, receiving a notification message including customer benefit information from a predetermined shop terminal, and transmitting the notification message including customer benefit information to a client terminal of the corresponding customer who has requested the registration of the shop as the affiliated store by referring to the customer information mapped to the corresponding affiliated store, if the shop which has transmitted the notification message is a registered affiliated store.

12. The system according to claim 11, wherein the affiliated store information processing apparatus compares the number of affiliated store registration requests for the corresponding shop with a preset number, and as a result of the comparison, if the number of affiliated store registration requests for the corresponding shop exceeds the preset number, the affiliated store information processing apparatus transmits the affiliated store registration request information of the customer to the corresponding shop terminal, and if the number of affiliated store registration requests for the corresponding shop is less than the preset number, the affiliated store information processing apparatus holds the transmission of the affiliated store registration request information of the customer to the corresponding shop terminal.

13. The system according to claim 11, wherein if the affiliated store information processing apparatus receives a signal indicating that the affiliated store registration has been approved from the shop terminal, the affiliated store information processing apparatus maps information on the corresponding shop with information on the customer who has requested the affiliated store registration, and classifies and registers the corresponding shop as an affiliated store of the corresponding customer in the database, and if the affiliated store information processing apparatus does not receive a signal indicating that the affiliated store registration has been approved from the shop terminal, the affiliated store information processing apparatus maps information on the corresponding shop with information on the customer who has requested the affiliated store registration, and classifies and registers the corresponding shop as a non-approved affiliated store of the corresponding customer in the database.

14. The system according to claim 13, wherein the affiliated store information processing apparatus pushes the affiliated store information of the customer to a designated website if the corresponding shop is classified and registered as an affiliated store or a non-approved affiliated store of the corresponding customer so that the corresponding customer can have the feedback in real time with whether or not the information requested by himself or herself has been processed normally through the website.

15. The system according to claim 11, wherein the affiliated store registration request information comprises the corresponding customer's ID, comment, e-mail information, terminal number, message reception agreement data and e-mail reception agreement data, and a shop's name, telephone number, address and business type information, which are needed to request the affiliated store registration, and
the customer benefit information comprises any one of coupon information and commodity discount information.
